# EUROPEAN PATENT APPLICATION

(11) **EP 1 835 670 A1**
(43) Date of publication of application: **19.09.2007**
(21) Application number: 06425167.1
(22) Date of filing: 14.03.2006
(51) Int. Cl.: H04L 12/56

(54) **Coexistence of legacy GPRS/EGPRS radio blocks and reduced transmit time interval (RTTI) radio blocks**

(71) Applicant: Siemens S.p.A., Milano (IT)
(72) Inventor: Hole, David, SO51 7DB Romsey (GB); Parolari, Sergio, 20133 Milano (IT); Provvedi, Leonardo, SO53 4LT Eastleigh, Hampshire (GB); Vutukuri, Eswar, SO51 7LR Romsey, Hampshire (GB)
(74) Representative: Giustini, Delio

(57) **Abstract**

RTTI (reduced transmit time interval) radio blocks (10 ms) and standard (legacy) RLC/MAC radio blocks (20 ms) currently used by the GSM/EDGE compliant mobile radio networks will have to live together soon. The proposed method allows the coexistence of RTTI and legacy GPRS/EGPRS radio blocks on the shared resources allocated for sustaining temporary block flows (TBF). Accordingly, the transmitting entity, either BTS or MS, sets the configuration of standard stealing flags usable for selecting a corresponding coding scheme (CS) foreseen for either GMSK or 8-PSK modulated radio blocks. Then it sets the logical values of a predetermined number of additional stealing flags from payload, shared among the bursts composing a RTTI radio block to be transmitted, in order to obtain a configuration of flags univocally associated to the format of said RTTI radio block. The receiving entity, either MS or BTS, decodes the configuration of the additional stealing flags for detecting the format of the actual RTTI radio block. The method is valid for GPRS CS1-4 (GMSK), EGPRS MCS1-4 (GMSK), and EGPRS MCS5-9 (8-PSK). In a variant valid for the EGPRS MCS1-4 only, the four extra stealing flags already standardized can be negated to discriminate the RTTI block. RTTI blocks are provided in "2-burst format" (1 TS of 2 TDMA frames) and "4-burst format" (2 TS of 2 TDMA frames). The method also accounts for the USF scheduling of RTTI radio blocks multiplexed with standard radio blocks (fig.3).

## Description

### FIELD OF THE INVENTION

The present invention relates to the field of mobile radio networks compliant with GSM/EDGE and more precisely to a method to allow the coexistence of "legacy" GPRS/EGPRS radio blocks and reduced transmit time interval (RTTI) radio blocks on the same resources (used acronyms are given at the end of the description). In view of the future standardization of RTTI radio blocks, term "legacy" with a certain degree of anticipation has to be intended as specified in the actual 3GPP standard documents.

### BACKGROUND ON THE 3GPP GSM/EDGE NETWORK

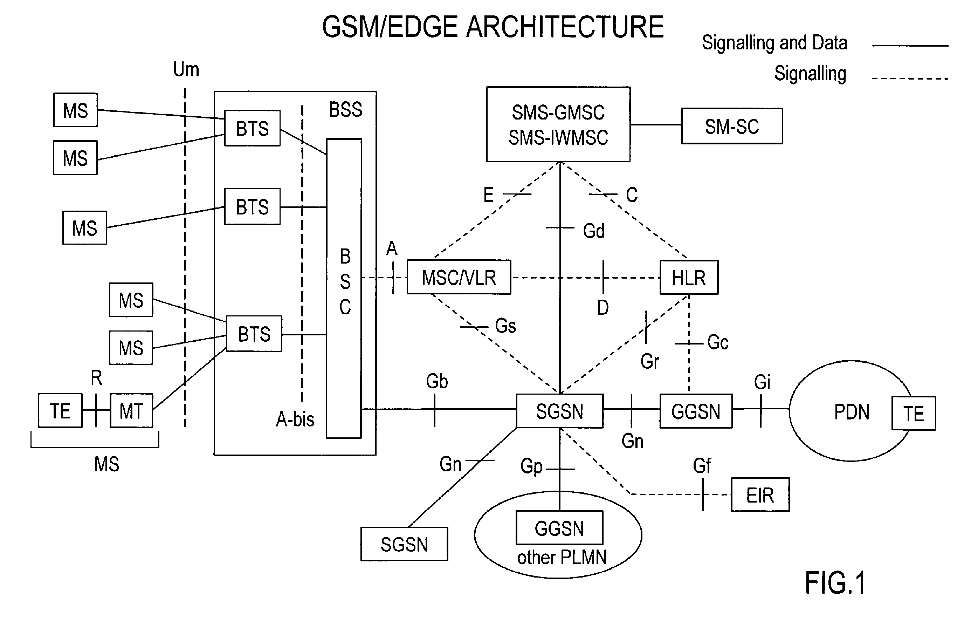

**Fig.1** shows the functional architecture of a GSM/EDGE network according to 3GPP TS 44.060. The depicted network includes the following functional blocks: MSs (TE and MT), BSS (both BTSs and BSC), SGSN, GGSN, EIR, MSC/VLR, HLR, SMS-GMSC, SMS-IWMSC, and SM-SC. Inside the MS the first functional block TE is connected to the second functional block MT through a connection indicated by a Reference point R, typically supporting a standard serial interface. The following interfaces are foreseen: Um, A-bis, A, Gb, Gi, Gp, Gn, Gp, Gf, Gs, Gr, Gd, D, E, C, whose connectivity between the relevant blocks are directly visible in the figure.

Every MS (MT) is connected to its serving BTS through the Um radio interface for exchanging voice and data services and the relevant signalling. The BSS includes a plurality of BTS connected to a BSC through a respective A-bis interface. The BSC is connected to the core network, mainly including MSC and SGSN, through the A and Gb interfaces accounting for circuit switched domain (CS) and packet switched domain (PS), respectively. Former BSSs are evolved in GERANs in order to allow higher data throughputs and incremental redundancy when erroneous data blocks are retransmitted. Furthermore, the Gn interface connects two GSN nodes in the same PLMN system, while the Gp interface connects two GSN nodes belonging to different PLMN systems.

In operation, at the Um and A-bis interfaces several protocols are stacked upon the physical layer, in particular: SNDCP, LLC, RLC, and MAC. The SNDCP protocol controls the transfer of network protocol units (N-PDUs) between the MS mobile and SGSN node. The main functions of the SNDCP protocol are:
- Multiplexing of packet data protocols, for instance IP.
- Compression /decompression of the user data packets.
- Compression /decompression of the protocol control information.
- Segmentation of NPDUs within LLC frames and re-assembly of the LLC frames the NPDUs.

To carry out these functions the SNDCP protocol avails of a NSAPI to identify in the MS mobile the access point to a packet data protocol PDP, while in SGSN and GGSN nodes it identifies the context associated to an address of the above mentioned PDP protocol.

The RLC gives a reliable radio link and maps the LLC frames within the physical GSM channels. The RLC/MAC avails of the following GPRS channels: PBCCH, PCCCH, PACCH, and PDTCH conveyed on PDCH. The RLC/MAC packet is mapped on radio blocks of the GSM multiframe. A radio block is transported by four consecutive Normal bursts. At physical layer the four Normal bursts are interleaved on four consecutive TDMA frames of 4,615 ms duration. The physical link layer protocol is responsible for FEC block code enabling error detection and correction at the receiver. Four convolutional coding schemes (CS-1,...CS4) are foreseen for the GPRS, and nine modulation and coding schemes (CS-1,...CS9) for the EGPRS, generating different bitrates.

Signalling procedures for accessing the radio channel are controlled by MAC, which also governs dynamic allocation of the resources (request and grant). Dynamic allocation means that a particular transmission resource, consisting for instance of a PDCH channel on a physical timeslot, is made time division shareable among more MS mobiles, each of them being engaged in an active session of data transfer, or signalling, through the same transmission resource jointly assigned. To the specific aim of dynamic allocation, the BSC includes a PCU implementing a proprietary scheduling algorithm.

The sub-set of MAC procedures governing the multiplexing of the transmissions on the shared channels, provide the MS with temporary assignment of resources, called TBFs, on the physical layer to sustain the single transmission. A TBF may include memory buffer to house the queues of RLC/MAC blocks. Each TBF assignment enables the unidirectional transfer of radio blocks (for payload data and signalling) within a cell between the network and a mobile station MS, or vice versa. Control messages for the establishment/abatement of a connection between service points and the allocation/de-allocation of relevant supported physical resources, for instance the TBF buffers, contemplate different opportunities capable of covering the whole survey foreseen in the packet transfer mode of the RR sublayer. For simplicity, it is here described a very limited survey of establishment/abatement of TBF connections and of the relevant operation modes. We can start from the establishment of a TBF uplink connection following a Packet Transfer originated by the mobile. In this case the mobile requires the assignment of a GPRS channel sending a PACKET CHANNEL REQUEST message including the TBF resources requested for the transfer of packets to the network. In case of reception, the network replies with a PACKET UPLINK ASSIGNMENT message on the control channel allocating to the mobile the resources requested for the uplink transfer of packets. The resources include one or more PDCH channels and a TFI value. The network does not assign any buffer in uplink direction (the buffer resides in the mobile). The network requires simply knowing the number of blocks that a MS mobile intends to transmit. We can now proceed examining the assignment of a TBF downlink following a Packet Transfer ended towards the mobile. In this case at the end of the paging procedure, the network sends the mobile a PACKET DOWNLINK ASSIGNMENT message in the Ready state on the control channel, with enclosed the list of PDCH channels allocated for the downlink transfer. A buffer, relevant to the downlink TBF, is purposely allocated to contain the RLC/MAC blocks to be sent.

In the majority of the cases a TBF is kept alive only for the transfer of one or more LLC protocol units, to the right purpose of transferring the corresponding RLC/MAC blocks. The network assigns to each TBF its own temporary identifier, called TFI (Temporary Flow Identity). The mobile shall assume that the TFI value is unique among TBF competitors in each direction, uplink or downlink. A RLC/MAC data block is identified to the TBF to which it is associated through its own field where the identifier TFI is written, and another field to indicate the uplink or downlink direction of the block. Should the RLC/MAC block be referred to a control message, a field is foreseen to indicate the message transmission direction and type. In the case of dynamic allocation, the header of each RLC/MAC block transmitted on a PDCH channel in "downlink" direction includes an additional field called USF, which is used by the network in the form of a flag to control the time division multiplexing of different mobile stations on a physical channel PDCH in uplink direction. We can now better qualify the already mentioned PACKET UPLINK ASSIGNMENT message, sent by the network towards the mobiles, stating that it includes: the identifier TFI of the downlink/TBF buffer containing the control block carrying this message, the list of the allocated PDCH channels (time slots), and a corresponding USF value for each allocated channel (timeslot). One USF is scheduled for the transmission of one radio block. Three bits are foreseen for the USF field that enable to unambiguously discriminate up to eight users sharing a time-slot, also in the borderline case in which the single TBF buffer are associated all the eight time slots of a TDMA frame.

### LATEST PROPOSALS UNDER INVESTIGATION BY 3GPP IN ORDER TO DECREASE THE USAGE OF SHARED CHANNELS ASSIGNED FOR PS CONVERSATIONAL SERVICES

Different solutions are under investigations to reduce the transmission delay (latency) of data blocks over the GERAN Um radio interface. The final goal is to allow the realization of PS Conversational Services in 2G networks. In particular, a solution to support PS Conversational Services was already investigated a few years ago. Such a solution was based on the introduction of dedicated channels and the FLO that allows the channel coding of the layer-one to be configured at call setup. None of these two features is part of the standard for GERAN A/Gb mode yet. The benefit of an alternative solution would be linked to the possibility to exploit the nature of PS traffic, allowing multiplexing of several sessions onto the same resources. This can only be achieved by making use of shared channels. In this case some solutions are needed to meet the performance requirements (e.g. for VoIP), in terms of quality (i.e. packet loss) and E2E delay. A possible approach is based on the TTI reduction. A reduced TTI (say of 10 ms, instead of 20) would reduce the RLC RTT, thus allowing the possibility to perform retransmissions, so to decrease the packet loss, fast enough to maintain the E2E delay requirement.

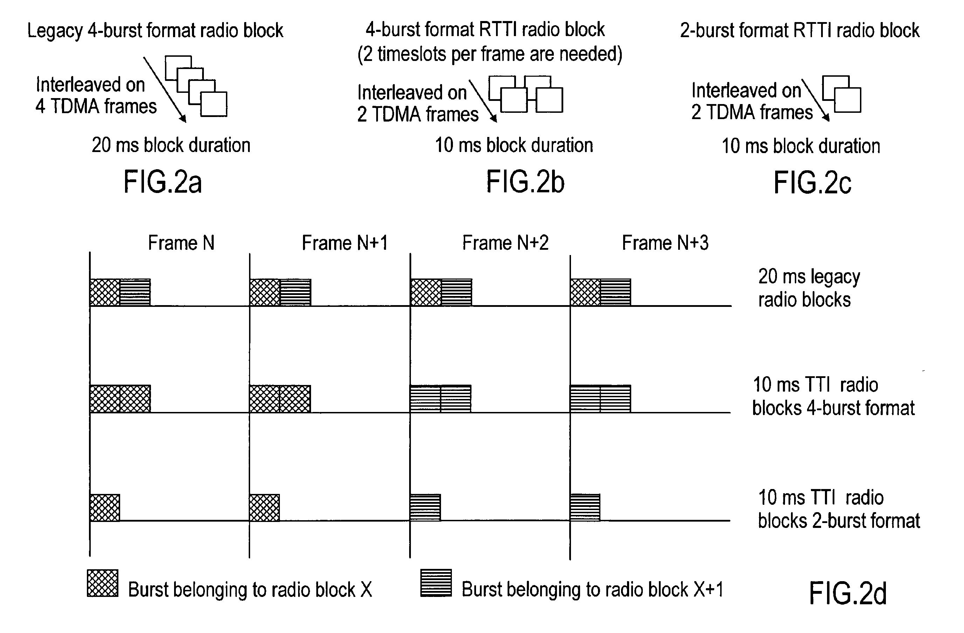

Radio blocks with a TTI of 10 ms have already been proposed in GERAN, see contribution published as **GP-060256,** titled: "Bandwidth requirement of VolP with 10 ms TTI". In this contribution two alternatives to the 20 ms TTI radio blocks are considered that reduce the TTI to 10 ms: a two-burst radio blocks and a dual carrier four-burst radio blocks. The shorter radio blocks will improve the bandwidth requirements. Both the legacy and known proposal of the GPRS/EGPRS RTTI radio blocks best fitting with the invention is depicted in **figures 2a** to **2d**. With reference to these figures we see that independently of their structure the RTTI radio blocks last half the duration of a legacy radio block. The 4-burst RTTI radio block of **fig.2b** is transmitted on a single carrier in parallel onto 2 different timeslots of the same frame interleaved in two sequential frames (obviously MSs with multislot capability are needed). **Fig.2d** is another representation of the previous **figures 2a** to **2c**.

The basic advantage of 4-burst RTTI radio blocks is that legacy radio blocks could be probably maintained, although changes would anyway be needed to the header and the interleaving scheme. Note that the assumption here is that the header would be distributed across the 2 timeslots in this case. But for low bandwidth applications such as VolP also the possibility to define 2-burst radio blocks (i.e. radio blocks with a TTI of 10 ms transmitted on a single timeslot) has been investigated in GP-060256. These radio blocks could be used in case of higher quality over the radio interface. In this case, assuming that such radio blocks could transport an IP packet (containing an AMR frame) every 20 ms, we could achieve a timeslot utilization of 50%, also in case of continuous voice transmission (i.e. without considering any form of DTX). The spare bandwidth could be used by other radio blocks, not necessarily carrying Conversational Services.

### USEFUL DETAILS ON CHANNEL CODING FROM 3GPP TS 45.003 V6.9.0

Each channel has its own coding and interleaving scheme. However, the channel coding and interleaving is organized in such a way as to allow, as much as possible, a unified decoder structure. Each channel uses the following sequence and order of operations:
- the information bits are coded with a systematic block code, building words of information + parity bits;
- these information + parity bits are encoded with a convolutional code, building the coded bits;
- reordering and interleaving the coded bits, and adding a stealing flag (8 bit flags), gives the interleaved bits.

All these operations are made block by block, the size of which depends on the channel. However, most of the channels use a block of either 456 coded bits or 1368 coded bits, corresponding to 456 coded symbols, which is interleaved and mapped onto bursts in a very similar way for all of them. This block of 456 coded symbols is the basic structure of the channel coding scheme.

In the case of FACCH, a coded message block of 456 bits is divided into eight sub-blocks. The first four sub-blocks are sent by stealing the even numbered bits of four timeslots in consecutive frames used for the TCH. The other four sub-blocks are sent by stealing the odd numbered bits of the relevant timeslot in four consecutive used frames delayed 2 or 4 frames relative to the first frame. Along with each block of 456 coded bits there is, in addition, a stealing flag (8 bits), indicating whether the block belongs to the TCH or to the FACCH. In the case of SACCH, BCCH, or CCCH this stealing flag is dummy. In the case of a packet switched channel, these bits are used to indicate the coding scheme used.

In GPRS mode both header and payload are coded together and GMSK modulated. Four different Coding schemes CS1 to CS4 are possible; for safety reasons these settings are identified by 8 stealing flags. In EGPRS mode, instead, the header and payload are coded independently to each other. The coding schemes of the header is identified by the 8 stealing flags (the "legacy" ones of GPRS) being the used modulation either GMSK or 8-PSK blindly detected from the header. The coding scheme of the payload is written in the header. There is only one header coding for GMSK-modulated MCSs (i.e. one header coding for MCS1 to MCS4). According to 3GPP TS 45.003, the transmission of GMSK MCSs is signalled by setting said 8 stealing flags to indicate CS4 ('0,0,0,1,0,1,1,0'), while four extra stealing flags (i.e. 1 per burst) are set to '0,0,0,0' to identify MCS1-4 (see definition of q(8),q(9),...,q(11) in sub-clause 5.1.5.1.5). Anyway, a mobile station in EGPRS mode will always assume that MCS1-4 are used if "legacy" stealing flags indicating CS4 are detected.

The four extra stealing flags are not present for MCS5-9 coding schemes. Eight standard stealing flags are set depending on the coding scheme as defined currently, i.e. '0,0,0,0,0,0,0,0' for MCS5 and 6, and '1,1,1,0,0,1,1,1' for MCS7, 8 and 9. This indicates the USF positions for a legacy MS (and also RTTI capable MS). Note that we do not need to worry about any other stealing flag settings here because MCS5-9 are together different from any other MCS/CS scheme because of different modulation, thus the choice is only between the 8-PSK MCS schemes.

### OUTLINED TECHNICAL PROBLEMS

For future transmissions of RTTI blocks the following considerations are valid if the coexistence with legacy radio blocks, and hence legacy TBFs, has to be accomplished:
1. The actual receiving entity, ether MS or BS, assumes that transmission of radio blocks is synchronized on a 20 ms TTI basis. This means that the basic "time unit" should remain 20 ms. If a RTTI block is transmitted in the first 10 ms of a 20 ms time unit, then another RTTI block must follow (and not a normal radio block, since it would break the synchronization rule).
2. Two RTTI blocks transmitted in the same time unit of 20 ms have to use the same modulation (this is needed at least to allow actual MSs to perform USF decoding).

Based on the above considerations we can assume that, if two consecutive RTTI blocks are sent in the same 20 ms time unit using GMSK all the "legacy" stealing flags are set to indicate CS4 and there is no means to discriminate neither between conventional and RTTI blocks nor between 2-burst and 4-burst formats of the RTTI block. A second problem to solve is to allow legacy USF decoding (which needs 20 ms), in conjunction with fast (10 ms) USF decoding for RTTI radio blocks.

### OBJECTS OF THE INVENTION

In view of the state of the art described, object of the present invention is to provide a method able to solve the highlighted problems concerning the coexistence of standard GPRS/EGPRS radio blocks and future transmissions of RTTI radio blocks. The method shall enable the receiving entity to distinguish:
- that a RTTI radio block has been transmitted in the allocated channel, and
- what out of 2-burst and 4-burst format of the RTTI radio blocks has been used for transmitting the actual RTTI radio block.

Furthermore, the method shall allow correct USF decoding by the MSs when standard and RTTI radio blocks live together.

### SUMMARY AND ADVANTAGES OF THE INVENTION

The invention achieves said objects by providing in a GSM/EDGE compliant mobile radio network a method to allow the coexistence of standard GPRS/EGPRS radio blocks and reduced transmit time interval, also termed RTTI radio blocks, on the shared resources allocated for sustaining temporary block flows, called TBFs, as disclosed in claim 1. Additional advantageous features are described in the dependent claims.

The proposed method includes the following steps:
- setting, by the transmitting entity, the configuration of standard stealing flags usable for selecting a corresponding coding scheme foreseen for either GMSK or 8-PSK modulated radio blocks;
- setting, by the transmitting entity, the logical values of a predetermined number of additional stealing flags from payload, shared among the bursts composing a RTTI radio block to be transmitted, in order to obtain a configuration of flags univocally associated to the format of said RTTI radio block;;
- decoding, by the receiving entity, the configuration of the additional stealing flags for detecting the format of the actual RTTI radio block.

Profitably, the method is valid for GPRS, MCS1-4 EGPRS (GPRSK), and MCS5-9 EGPRS (8-PSK) that thanks to the additional stealing flags from payload can discriminate between standard and RTTI radio blocks from the discrimination between different RTTI used format.

According to a variant of the method valid for the MCS1-4 EGPRS only, the transmitting entity could profitably:
- negating the logical value of a fixed number of extra stealing flags shared among the bursts composing a radio block for discriminating between GPRS CS4 and MCS1-4 EGPRS for unambiguously indicating the transmission of a RTTI radio block;
- in its turn the receiving entity could decode these extra stealing flags before decoding the additional stealing flags so as to avoid the problem of false positives.

For example, the extra stealing flags configured as '0,0,0,0' as mentioned in TS 45.003, sub-clause 5.1.5.1.5 (bits q(8),q(9),...,q(11) are inverted to '1,1,1,1' for indicating two actual RTTI radio blocks lasting (nearly 10 ms) half the fixed period of standard radio blocks.

The method also accounts for the USF scheduling of RTTI radio blocks multiplexed with standard radio blocks. Clearly, a mobile station attempts to read the "10 ms USF" only in RTTI radio blocks sent in DL, this implies as a first think the discrimination of a RTTI radio block. To avoid conflicts, if the normal (standard) USF is set to a valid value, the "10 ms USFs" will have to be set to undefined value, and vice versa.

A fast (10 ms) USF scheduling is allowed, if multiplexing with standard radio blocks is not required, whereby RTTI blocks could just carry one or two "10 ms USF" (one in case of "2-burst format", two in case of "4-burst format"). In this case the "10 ms USF" would refer to a point in time 10 ms ahead.

Multiplexing with standard radio blocks can still have the "10 ms USF" as a pointer to 10 ms ahead (so to reduce the RTT by 10 ms), whereby two "10 ms USFs" (pointing to two different times!) are defined in the same DL RTTI block (i.e. two "10 ms USFs" defined in 10 ms).

Which between standard and fast scheduling is used has to be signalled to the mobile stations This is needed by the MS to know if the "10 ms USF" is pointer to 10 or 20 ms ahaed.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1**, already described, shows the functional architecture of the GSM/EDGE network;
- **figures 2a, 2b,** and **2c,** already described, show different radio block formats already used in the network of fig.1 or merely proposed in published contributions;
- **fig.2d,** already described, is an alternative representation of the previous figures 2a to 2c;
- **figures 3, 4,** and **5** show possible scheduling of standard and RTTI radio blocks made possible by the method of the invention.

### DETAILED DESCRIPTION OF AN EMBODIMENT OF THE INVENTION

A GPRS RTTI-capable transmitting entity, either BTS or MS, operating in accordance with the method of the invention for transmitting two RTTI radio blocks lasting 10 ms inside the 20 ms standard MAC duration, (disregarding for the moment the USF allocation) shall prepare each transmission burst as in the following:
- set the corresponding two out of eight standard stealing flags b(0),..., b(7) in order to complete the CS configuration at the end of the 20 ms;
- set the logical value of the corresponding one out of two additional "RTTI-type" stealing flags in order to complete a configuration able to discriminate between "2-burst RTTI blocks" and "4-burst RTTI blocks" at the end of the 10 ms.

An RTTI-capable transmitting entity shall prepare each transmission burst of an GMSK-RTTI block as in the following:
- set the corresponding two out of eight standard stealing flags b(0),..., b(7) in order to set the CS4 configuration at the end of the first 10 ms;
- assert the logical value of corresponding one out of four extra stealing flags q(8), ..., q(11)) in order to indicate that two RTTI radio blocks are sent instead of the normal EGPRS block;
- set the logical value of the corresponding one out of two additional "RTTI-type" stealing flags in order to complete a configuration able to discriminate between "2-burst RTTI blocks" and "4-burst RTTI blocks".

An RTTI-capable transmitting entity shall prepare each transmission burst of an 8PSK-RTTI block as in the following:
- set the corresponding two out of eight standard stealing flags b(0),..., b(7) in order complete a configuration able to discriminate between MCS5&6 and MCS7,8&9 at the end of the first 10 ms;
- set the logical value of the corresponding one out of four additional "RTTI-type" stealing flags in order to complete a configuration able to discriminate between "2-burst RTTI blocks" and "4-burst RTTI blocks".

An RTTI-capable receiving entity, either BTS or MS, operating in accordance with the method of the invention shall identify a block as a "GMSK 2-burst RTTI block" (after 10 ms, as required) by detecting:
- (part of) the "legacy" stealing flags set to indicate CS4:
   ■ For the first RTTI block in the 20 ms time unit, the entity has to discriminate between '0,0,0,1' (first 4 stealing flags to indicate CS4) and the other initial 4-bit configurations to indicate CS1/CS2/CS3.
   ■ For the second RTTI block in the 20 ms time unit, the entity can use all the stealing flags in the 20 ms time unit, i.e. it can discriminate between '0,0,0,1,0,1,1,0' (stealing flags to indicate CS4) and the other stealing flags settings indicating CS1/CS2/CS3.
- plus 4 stealing flags set to 1 of which: 2 extra stealing flags (those that can be read in the 10 ms time unit), plus the 2 additional "RTTI-type" stealing flags.

Similarly, an RTTI-capable receiving entity would identify a block as a "GMSK 4-burst RTTI block", after 10 ms, as required, by detecting:
- (part of) the "legacy" stealing flags set to indicate CS4,
- plus 4 stealing flags set to 1 of which: 2 extra stealing flags (those that can be read in the 10 ms time unit) on a given timeslot and also the corresponding 2 extra stealing flags on the subsequently allocated timeslot,
- plus 4 stealing flags set to 0 of which: the 2 additional "RTTI-type" stealing flags on a given timeslot and also the corresponding additional "RTTI-type" stealing flags on the subsequently allocated timeslot.

In any case an RTTI-capable receiving entity would be able to read a CS1 coded block (after 20 ms) by detecting the "legacy" stealing flags set to indicate CS1. This is needed to allow a mobile station to read distribution messages (CS1 coded).

The behaviour of a receiving entity depending on the setting of legacy, extra and newly introduced "RTTI-type" stealing flags is summarized below, according to the specific TBF mode.

| | GPRS TBF | EGPRS TBF | RTTI TBF |
|---|---|---|---|
| Stealing flags set to CS1. | CS1 decoding | CS1 decoding | CS1 decoding |
| Stealing flags set to CS4. | CS4 decoding | MCS1-4 | MCS1-4 |
| Extra stealing flags set to '0,0,0,0'. | (decoding will fail) | decoding | decoding |
| Stealing flags set to CS4. | CS4 decoding | MCS1-4 | "GMSK 2-burst |
| 2 extra stealing flags set to'1,1'. | (decoding will fail) | decoding? | RTTI block" |
| 2 additional "RTTI-type" stealing flags set to '1,1'. | | (If performed, decoding will fail) | decoding (after 10 ms) |
| Stealing flags set to CS4. | CS4 decoding | MCS1-4 | "GMSK 4-burst |
| 2 extra stealing flags set to '1,1' on a given timeslot and also on the subsequently allocated one | (decoding will fail) | decoding? | RTTI block" |
| | | (If performed, decoding will fail) | decoding |
| | | | (after 10 ms) |
| 2 additional "RTTI-type" stealing flags set to '0,0' on a given timeslot and also on the subsequently allocated one. | | | |

In case of 8-PSK modulation, we define a whole set of 8 RTTI type stealing flags for 8PSK RTTI blocks. An RTTI capable receiving entity shall read four additional "RTTI-type" stealing flags (in the 10 ms time unit, i.e. two per burst) to discriminate between "4-burst RTTI blocks" and "2-burst RTTI blocks". The RTTI-capable receiving entity shall then identify a block as a "Corresponding 8-PSK 2-burst RTTI block", after 10 ms, as required, by detecting:
- (part of) the "legacy" stealing flags set to indicate MCSS&6 or MCS7,8&9:
   ■ For the first RTTI block in the 20 ms time unit, the receiving entity has to discriminate between '0,0,0,0' (first 4 stealing flags to indicate MCSS&6) and the other initial 4-bit configurations to indicate MCS7,8&9 i.e. '1,1,1,0'.
   ■ For the second RTTI block in the 20 ms time unit, the receiving entity can use all the stealing flags in the 20 ms time unit, i.e. it could discriminate between '0,0,0,0,0,0,0,0' (stealing flags to indicate MCSS&6) and the other stealing flags settings indicating MCS7,8&9 i.e. '1,1,1,0,0,1,1,1'.
- Plus 4 additional "RTTI-type" stealing flags (2 per burst) set to '1,1,1,1'.

Similarly, an RTTI-capable receiving entity shall identify a block as a "Corresponding 8 PSK 4-burst RTTI block", after 10 ms, as required, by detecting:
- (part of) the "legacy" stealing flags set to indicate MCS5&6 or MCS7,8&9.
- Plus 8 additional "RTTI-type" stealing flags set to 0: the 4 additional "RTTI-type" stealing flags on a given timeslot and also the corresponding additional "RTTI-type" stealing flags on the subsequently allocated timeslot.

In this case there is a limited risk of false positives (i.e. legacy block patterns matching the above definition of the stealing flag settings). However, even if there is a false positive, a RTTI receiving entity would simply try to decode it in a RTTI way and fail. If the receiving entity fails to decode the block in RTTI way, then it shall attempt to decode the block again in normal EGPRS way.

The other problem to solve is to allow legacy USF decoding, which needs 20 ms, in conjunction with fast (10 ms) USF decoding for RTTI TBFs. Three possible ideas of solution are illustrated.

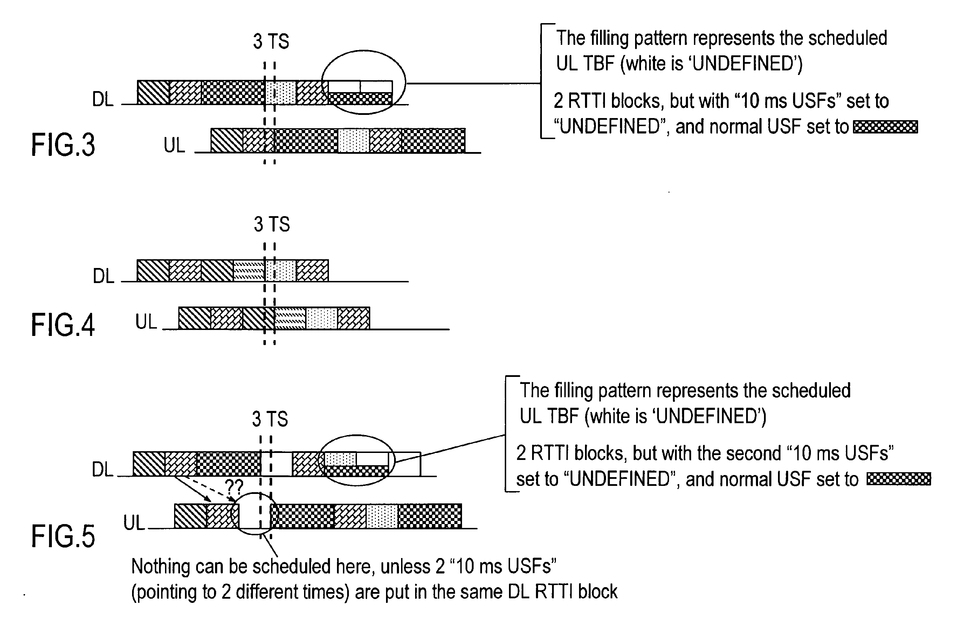

With reference to fig.3, a first solution could be to have both a normal (standard) USF read also by legacy MSs plus two "10 ms USFs" defined in the 20 ms time unit on a given timeslot read only by RTTI-capable MSs. Clearly, if the normal USF is set to a valid value, the two "10 ms USFs" will have to be set to an undefined value, and vice versa. Note that the assumption here is that the "10 ms USFs" is defined per timeslot, regardless of the 2-burst or 4-burst RTTI block format of the DL RTTI block containing it. Then:
- If a RTTI MS reads the corresponding "10 ms USFs" on a given timeslot it will be allowed to send a "2-burst RTTI blocks" on the corresponding timeslot.
- If a RTTI MS reads the corresponding "10 ms USFs" on a given timeslot and also on the subsequently allocated one, it will be allowed to send either a "4-burst RTTI blocks", or 2 different "2-burst RTTI blocks" on the two timeslots.

Furthermore, a normal USF could be assigned to an RTTI TBF as well. This would allow to transmit legacy blocks in the DL (with legacy USF), but still schedule RTTI blocks in the UL:
- If a RTTI MS reads the corresponding normal TBF in a legacy downlink radio block on a given timeslot, it will be allowed to send either a normal radio blockor 2 consecutive "2-burst RTTI blocks" on the corresponding timeslot.
- if a RTTI MS reads the corresponding normal TBF in 2 legacy downlink radio blocks transmitted on a given timeslot and on the subsequently allocated one, in addition to the options above it will be also allowed to send 2 consecutive "4-burst RTTI blocks".

In any case it has to be noted that the new "10 ms USF" mechanism described so far does not imply a further reduction in the RTT, since in this proposal the USF would anyway refer to a point in time 20 ms ahead (not 10), to allow multiplexing with legacy MSs. The real benefit would be in the higher scheduling flexibility. This is shown in the upper part of **fig.3.** If there is the need to multiplex legacy MSs, no benefit from "10 ms USF" on RTT, only a scheduling flexibility.

With reference to **fig.4,** of course, things would change if multiplexing with legacy MS were not required. According to a second solution, it is not necessary to maintain the normal USF to be read in 20 ms, and RTTI blocks could just carry one or two "10 ms USF" (one in case of "2-burst format", two in case of "4-burst format"). In this case the USF would refer to a point in time 10 ms ahead allowing a further 10 ms reduction in the RTT. If there is not need to multiplex legacy MSs, there is also a 10 ms gain from "10 ms USF".

With reference to **fig.5,** according to a third solution it is still possible in principle to allow multiplexing with legacy MSs and have the "10 ms USF" as a pointer to 10 ms ahead (so to reduce the RTT by 10 ms). But this would imply some inefficiency in scheduling UL resources. This inefficiency could be avoided, e.g. by defining 2 "10 ms USFs" (pointing to 2 different times!) in the same DL RTTI block (i.e. 2 "10 ms USFs" defined in 10 ms).

Although the invention has been described with particular reference to a preferred embodiment, it will be evident to those skilled in the art, that the present invention is not limited thereto, but further variations and modifications may be applied without departing from the scope thereof.

### USED ACRONYMS

3GPP - 3^{rd} Generation Partnership Program
AMR - Adaptive Multi Rate
BCCH - Broadcast Control Channel
BSC - Base Station Controller
BSS - Base Station Subsystem
BTS - Base Transceiver Station
CCCH - Common Control Channel
CS - Circuit Switched Coding Scheme
CTSCCH -
DL - Downlink
DTX - Discontinuous Transmission
E2E - End-to-End
EDGE - Enhanced Data rates for GSM Evolution
EGPRS - Enhanced GPRS
EIR - Equipment Identity Register
FACCH - Fast Associated Control Channel
FLO - Flexible Layer One
GERAN - GSM/EDGE Radio Access Network
GGSN - Gateway GSN
GMSC - Gateway MSC
GMSK - Gaussian Minimum Shift Keying
GP - GERAN Plenary
GPRS - General Packet Radio Service
GSM - Global System for Mobile communications
IWMSC - InterWorking MSC
LLC - Logical Link Control
MAC - Medium Access Protocol
MCS - Modulation and Coding Scheme
MS - Mobile Station
MSC - Message Switching Centre
MT - Mobile Terminated
NPDU - Network PDU
NSAPI - Network SAPI
PACCH - Packet Associated Control Channel
PBCCH - Packet Broadcast Control Channel
PCCCH - Packet Common Control Channel
PCU - Packet Control Unit
PDTCH - Packet Data Traffic Channel
PDCH - Packet Data Channel
PDU - Protocol Data Unit
PLMN - Public Land Mobile Network
PS - Packet Switched
RAN - Radio Access Network
RLC - Radio Link Control
RTT - Round Trip Time
RTTI - Reduced TTI
SACCH -
SAPI - Service Access Point Identifier
SC - Service Centre
SGSN - Service GPRS Support Node
SMS - Short Message Service
SNDCP - Subnetwork Dependent Convergence Protocol
TBF - Temporary Block Flow
TCH -
TE - Terminal Equipment
TFCI - Transport Format Combination Indicator
TFI - TBF identifier
TSG - Technical Specification Group
TTI - Transmit Time Interval
UL - Uplink
USF - Uplink State Flag
VLR - Visitor Location Register
VoIP - Voice over IP

## Claims

1. In a GSM/EDGE compliant mobile radio network, a method to allow the coexistence of standard GPRS/EGPRS radio blocks and reduced transmit time interval radio blocks, also termed RTTI radio blocks, on the shared resources allocated for sustaining temporary block flows, called TBFs, including the steps of:
- setting, by the transmitting entity, the configuration of standard stealing flags usable for selecting a corresponding coding scheme foreseen for either GMSK or 8-PSK modulated radio blocks;
- decoding, by the receiving entity, said standard stealing flags in order to acquire the used coding scheme and if necessary blind detecting the type of modulation used,
**characterized in that** further includes the step of:
- setting, by the transmitting entity, the logical values of a predetermined number of additional stealing flags from payload, shared among the bursts composing a RTTI radio block to be transmitted, in order to obtain a configuration of flags univocally associated to the format of said RTTI radio block;
- decoding, by the receiving entity, the configuration of the additional stealing flags for detecting the format of the actual RTTI radio block.

2. The method of claim 1, **characterized in that** at least two formats are provided and the logical values of said additional stealing flags of the two formats are in negated reciprocal relation.

3. The method of claim 2, **characterized in that** the logical values of the additional stealing flags are constant in the whole RTTI radio block.

4. The method of claim 2 or 3, **characterized in that** said additional stealing flags are configured so as to indicate two 2-burst format radio blocks, each one allocated in the same timeslot of two TDMA frames.

5. The method of claim 2 or 3, **characterized in that** said additional stealing flags are configured so as to indicate two 4-burst format radio blocks, each one allocated in the same couple of subsequently allocated time slots of two TDMA frames.

6. The method of any claim 1 to 5, **characterized in that** limitedly to the GMSK modulated radio blocks the transmitting entity further executes the steps of:
- negating the logical value of a fixed number of extra stealing flags shared among the bursts composing a radio block, traditionally used for discriminating between the GPRS coding scheme called CS4 and the MCS1-4, to the aim of unambiguously indicating the transmission of a RTTI radio block;
- decoding said extra stealing flags by the receiving entity before decoding the additional stealing flags.

7. The method of any claim 4 to 6, **characterized in that** each timeslot transmitted downlink by a base station (BTS) to the served mobile stations (MS) may include an Uplink State Flag allocated on RTTI radio block basis, called RTTI USF, used by the network to schedule the uplink mobile station (MS) transmissions on the same timeslot the USF is received.

8. The method of claim 7, **characterized in that** two RTTI USFs scheduled in the same timeslot during a standard radio block period (20 ms) are set to undefined/valid value when the normal USF scheduled for a standard radio block is set to a valid/undefined value.

9. The method of claim 7, **characterized in that** if multiplexing with standard MS is not required, said RTTI radio blocks transmitted downlink can carry either one USF for 2-burst format radio blocks or two USFs for 4-burst format radio blocks, said USFs referring to a point in time 10 ms ahead.

10. The method of claim 7, **characterized in that** in case RTTI radio blocks are multiplexed with standard radio blocks, two USFs for RTTI radio blocks are defined in the same downlink RTTI radio block for reducing the round trip time by the duration of a RTTI radio block.

11. The method of any claim 7 to 10, **characterized in that** standard and fast scheduling respectively in case of multiplexing/no multiplexing with standard radio blocks is signalled by the network (BSC) to the mobile stations (MS), being this needed by the mobile stations to know if the RTTI USF is pointer to 10 or 20 ms ahead.
